# EUROPEAN PATENT APPLICATION

(11) **EP 1 341 100 A1**
(43) Date of publication of application: **03.09.2003**
(21) Application number: 03251200.6
(22) Date of filing: 27.02.2003
(51) Int. Cl.: G06F 17/30

(54) **Web browsing with coordinated voice browser and textual browser**

(30) Priority: 28.02.2002 GB 0204768
(71) Applicant: Mitel Knowledge Corporation, Ottawa, Ontario K2K 2W7 (CA)
(72) Inventor: Baker, Katherine, Ottawa, Ontario (CA); Balaba, Natalia, Ottawa, Ontario K2B 8N8 (CA)
(74) Representative: Beresford, Keith Denis Lewis

(57) **Abstract**

A coordinated browsing system and method to provide bimodal feature access by having a caller access a single application through two browsers simultaneously. One browser delivers a voice application using a device that enables a voice path, and the other browser serves text to a device that displays textual data. An independent coordinator object communicates with the browsers to maintain a synchronized browsing experience across the two client browsers. The coordinator object detects events or changes in one browser and notifies the other browser accordingly.

## Description

### Field of Invention

This invention relates to web applications and in particular to a coordinated browsing system and method to provide bimodal feature access for web applications.

### Background of the Invention

To reduce cost, interactive voice response (IVR) applications are being used for repetitive tasks such as banking, ordering office supplies, redirecting calls and retrieving database information. An example of such an application is telebanking. A bank client calls into a bank call center and uses telephone DTMF keys to give instructions for standard transactions such as accessing account information and bill payments. However, current IVR applications have limited communication capabilities to interact with callers for more complex transactions. In particular, IVR applications have problems where a large number of choices or large amounts of information have to be presented to the callers. For example, a credit card IVR application may have a menu of nine choices. Often, by the time a caller has listened to all nine choices, he may have forgotten the first choice.

Speech recognition (SR) systems have alleviated some of these limitations by allowing callers to speak instructions as opposed to navigating through menus using DTMF keys. However, SR systems have a number of reliability problems including interference with recognition patterns from, such as, background noise, nasal or throat congestion, or stammering.

SR based or IVR-type applications or a combination thereof rely on the callers to remember the presented information. Unfortunately, human memory is limited.

A solution to overcome these problems is to enable bimodal feature access where textual information is displayed simultaneously with matching voice information. Thus, callers may key in their responses using more sophisticated mechanisms than what is offered by DTMF, and may further view, and listen to, menu prompts simultaneously. This is particularly useful in the case where the menu options are long and varied such as retrieving messages from a unified messaging box, or locating an individual in a large organization.

One means of developing and deploying SR applications is to use web-hosted voice applications. The voice applications reside on web servers and are downloaded for rendering on web clients. Generally, an XML-based language is used to define speech dialogs. These XML documents are hosted on web servers. A voice portal is a call endpoint for a browser that is able to access web servers using HTTP, download a dialog in the form of an XML document and render it through the speech channel. The browser often contains a SR engine and a text-to-speech generator. Users may progress through the dialog or link to another dialog by using voice commands or by pressing keys on a telephone keypad.

However, bimodal feature access is difficult to implement in a system having distributed server-client architecture. As the client-side handles all of the interactions with a caller without notifying the server-side, an application residing on the server-side is not able to maintain control of a session with the caller. For example, if a caller selects moving from menu A to menu B, the client handles this and no notification is sent to the server application. The server application cannot control the session to coordinate textual data with voice data.

It is therefore desirable to provide bimodal feature access, which addresses, in part, some of the shortcomings of SR or IVR applications noted above.

### Summary of the Invention

According to an aspect of the present invention, there is provided a coordinated browsing system and method to enable bimodal access in a web-hosted voice application using an external object interacting with two independent browsers to coordinate activity between the browsers in the application.

According to a further aspect of the present invention, there is provided a coordinated browsing system and method to provide bimodal feature access by having a caller access a single application through two browsers simultaneously. One browser delivers a voice application using a device that enables a voice path, and the other browser serves text to a device that displays textual data. An independent coordinator object communicates with the browsers to maintain a synchronized browsing experience across the two client browsers. The coordinator object detects events or changes in one browser and notifies the other browser accordingly.

According to a further aspect of the present invention, there is provided a coordinated browsing system to enable bimodal feature access for a caller during a session, comprising a server-side application connected to a network for providing voice pages and textual web pages; a coordinator for coordinating the presentation of the voice pages with the presentation of the textual web pages during the session; a voice browser in communication with the server-side application and the coordinator for receiving caller voice activity and, in response, retrieving a voice page to present to the caller; and a textual browser in communication with the server-side application and the coordinator for receiving caller activity at the textual browser and, in response, retrieving a textual web page to present to the caller, and for providing notification to the coordinator of the caller activity occurring at the textual browser so that the coordinator, in response, notifies the voice browser to retrieve the voice page matching the textual web page for presentation to the caller; wherein the voice browser further provides notification to the coordinator of caller voice activity occurring at the voice browser so that the coordinator, in response, notifies the textual browser to retrieve the textual web page matching the voice page for presentation to the caller.

According to a further aspect of the present invention, there is provided a method of providing coordinated browsing to enable bimodal feature access for a caller during a session, comprising providing voice pages and textual web pages over a network; retrieving a voice page and a textual web page that match for presentation on a voice browser and a textual browser respectively; presenting the voice page with the presentation of the textual web page; monitoring caller voice activity on the voice browser in order to, in response, retrieve a new voice page to present to the caller and to notify a coordinator of the caller voice activity occurring at the voice browser so that the coordinator, in further response, notifies the textual browser to retrieve a new textual web page matching the new voice page for presentation to the caller; and monitoring caller activity on the textual browser in order to, in response, retrieve the new textual page to present to the caller and notify the coordinator of the caller activity occurring at the textual browser so that the coordinator, in further response, notifies the voice browser to retrieve the new voice page matching the new textual web page for presentation to the caller.

An advantage of the present invention is that the two browsers may be hosted on physically separate devices, such as, a cell phone and a PDA. The two browsers may also be combined, such as, on a desktop phone with embedded voice and textual browsers.

### Brief Description of the Drawings

The present invention will be described in detail with reference to the accompanying drawings, in which like numerals denote like parts, and in which
Figure 1 is a block diagram of a Coordinated Browsing System having a Voice Browser and a Textual Browser to provide bimodal feature access for web applications in accordance with one embodiment of the present invention;
Figure 2 is a flowchart of the steps to provide a coordinated browsing session initiated by the Textual Browser in the Coordinated Browsing System of Figure 1; and
Figure 3 is a flowchart of the steps to provide a coordinated browsing session initiated by the Voice Browser in the Coordinated Browsing System of Figure 1.

### Detailed Description

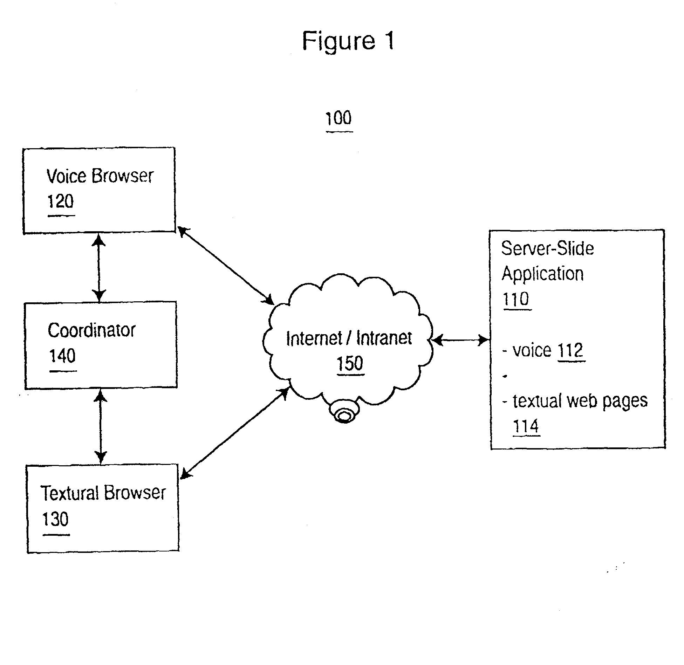

Referring to Figure 1, there is shown a block diagram of a Coordinated Browsing System 100 having a Voice Browser 120 and a Textual Browser 130 to provide bimodal feature access for web applications in accordance with one embodiment of the present invention. The System 100 comprises a Server-Side Application 110 having voice content 112 (voice pages / voice data) and textual web pages 114 (text data) connected with the Voice Browser 120 and the Textual Browser 130 over the Internet 150, and a Coordinator 140 in communication with the Voice Browser 120 and the Textual Browser 130.

The Voice Browser 120 is a browser for answering calls from a caller and making web requests to retrieve voice content 112 from the Server-Side Application 110. The received voice content 112 is parsed or interpreted and audible dialog prompts for the caller are according generated and played. A speech recognition engine is further included to recognize voice inputs from the caller. In addition, the Voice Browser 120 supports push for receiving notifications from the Coordinator 140. The Voice Browser 120 may be in the form of a VoiceXML browser such as Nuance Voyager (TM).

The Textual Browser 130 is a browser that makes web requests for the textual web pages 114 and displays the received textual web pages 114. In addition, the Textual Browser 130 supports push for receiving notifications from the Coordinator 140. For example, an implementation of the Textual Browser 130 is a WML browser with an open socket connection that listens for notifications from the Coordinator 140 to tell it to proceed to another page. The open socket connection of the WML browser may be initiated by a number of known methods.

There are, such as for example, two methods to initialize a coordinated browsing session. The first is where the user/caller launches a text browsing session from the Textual Browser 130. This causes an event to be sent to the Coordinator 140, which, in response, notifies the Voice Browser 120 to trigger the launch of a voice browsing session. In this case, the user/caller is pulling the text data, and having the voice data pushed to them.

The second method is where the user/caller first initiates a voice browsing session on the Voice Browser 120, which pushes a notification to the Coordinator 140 that, in response, notifies the Textual Browser 130 to trigger the launch of a text browsing session. In this case, the user/caller is pulling the voice data and having the text data pushed to them.

In either case, the Server-Side Application 110 serves a page or deck of content to the textual browser, which parses the markup language and presents the content in the appropriate form such as a page or the first card in the deck. This eventually takes the form of lines of text for display and softkey labels with associated actions such as a link to an anchor or URL (Uniform Resource Locator), or a script function call.

The voice content 112 in this architecture defines dialog for enabling the voice part of the Server-Side Application 110. The voice content 112 is provided in the form of a server side application. Alternately, the voice content 112 may be provided as a web page defined in VoiceXML (Voice Extensible Markup Language), VoxML (Voice Markup Language) or another speech markup language

The textual web pages 114 contain the content that is to be visually rendered for the caller on a display. The textual web pages 114 and the voice content 112 are created so that the content matches.

The Coordinator 140 is an object that is logically separate from both the Voice Browser 120 and the Textual Browser 130. The Coordinator 140 monitors the activity of, receives events from, and push notifications to both browsers to ensure that both the Voice Browser 120 and the Textual Browser 130 are maintaining a consistent or synchronized state. Thus, when the caller makes a request using the Textual Browser 130 to go to a new page, the coordinator receives this event and notifies the Voice Browser 120 to get the appropriate voice content 112. Conversely, when the caller speaks a response to a prompt, the Voice Browser 120 sends this event to the Coordinator 140, which then notifies the Textual Browser 130 to retrieve the appropriate textual web pages 114.

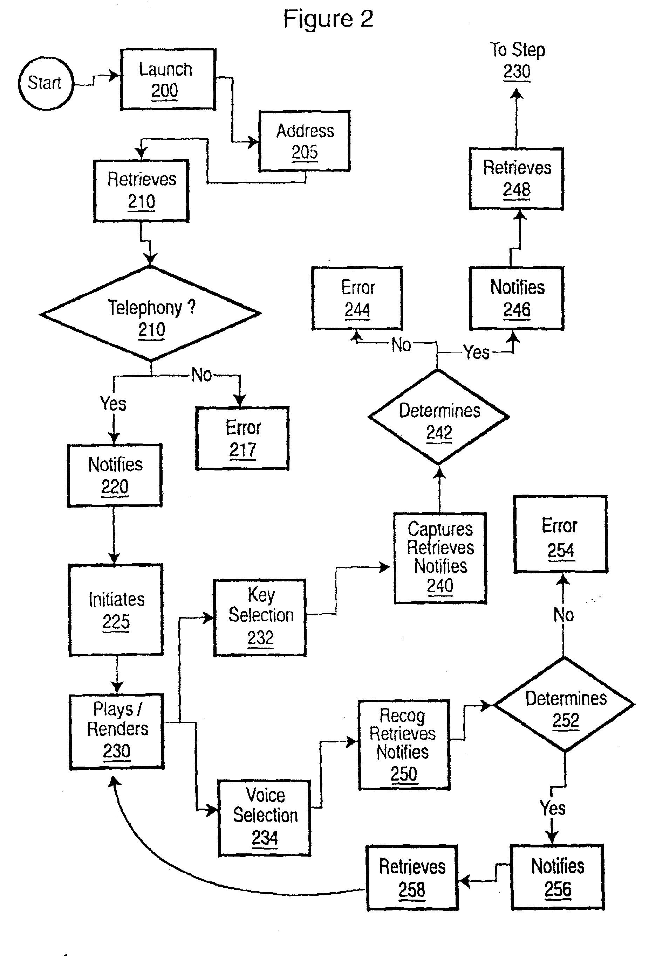

Referring to Figure 2, there is shown a flowchart of the steps to provide a coordinated browsing session initiated by the Textual Browser 130 in the Coordinated Browsing System 100 of Figure 1. On Start, a user launches a text browsing session from the Textual Browser 130 (step 200) on a browser device. The user specifies the address of the Server-Side Application 110 (step 205). The Textual Browser 130 then retrieves initial textual web pages 114 from the Server-Side Application 110 and notifies the Coordinator 140 of this event (step 210). The Coordinator 140 determines if the browsing device supports telephony sessions (step 215). If NO, then an error message is generated (step 217).

If YES, then the Coordinator 140 notifies the Voice Browser 120 (step 220). The Voice Browser 120, in response, initiates a telephony session on the browsing device and retrieves the initial voice content 112 from the Server-Side Application 110 (step 225). Then, the Voice Browser 120 plays the received voice content 112, the dialog, while the Textual Browser 130 renders the textual web pages 114 (step 230). Thus, at this point, the user has two methods of making a selection: (step 232) by key selection on the Textual Browser 130; and (step 234) by voice selection on the Voice Browser 120. Key selection includes pressing a key and, where available, a click using a mouse. Voice selection includes speaking an instruction.

Where the user makes a key selection (step 232), the Textual Browser 130 captures the user's action, retrieves a next textual web page 114 (the textual web page indicated by the key selection) from Server-Side Application 110 and notifies the Coordinator 140 of the event. The Coordinator 140 then determines if matching voice data exists (step 242). If there is no matching voice data, then an error message is generated (step 244). If there is matching voice data, then the Coordinator 140 notifies the Voice Browser 120 of the event (step 246). In response, the Voice Browser 120 retrieves the matching voice content 112 (step 248). This process is then repeated from Step 230 where the Voice Browser 120 plays the received voice content 112, while the Textual Browser 130 renders the received textual web pages 114.

Where the user makes a voice selection (step 234), the Voice Browser 120 uses speech recognition to determine the user's instructions, retrieves next voice content 112 (the voice content indicated by the voice selection) from Server-Side Application 110 and notifies the Coordinator 140 of the event (step 250). The Coordinator 140 then determines if matching text data exists (step 252). If there is no matching text data, then an error message is generated (step 254). If there is matching text data, then the Coordinator 140 notifies the Textual Browser 130 of the event (step 256). In response, the Textual Browser 130 retrieves the matching textual web pages114 (step 258). This process is then repeated from Step 230 where the Voice Browser 120 plays the received voice content 112, while the Textual Browser 130 renders the received textual web pages 114.

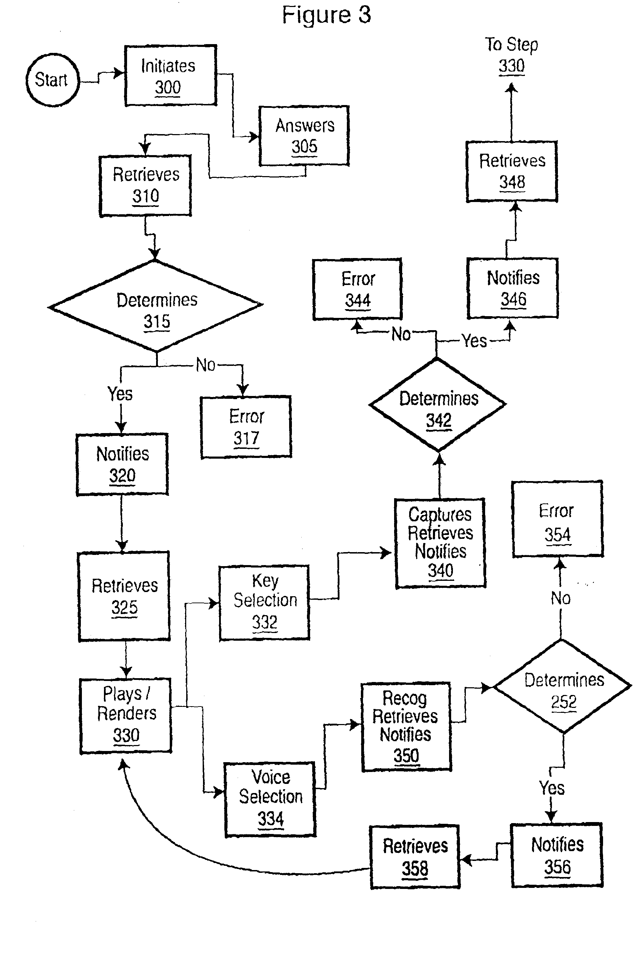

Referring to Figure 3, there is shown a flowchart of the steps to provide a coordinated browsing session initiated by the Voice Browser 120 in the Coordinated Browsing System 100 of Figure 1. On Start, a user initiates a call to the Voice Browser 120 (step 300). The Voice Browser 120 answers the call (step 305). The Voice Browser 120 then retrieves initial voice content 112 from the Server-Side Application 110 and notifies the Coordinator 140 of this event (step 310). The Coordinator 140 determines if the browsing device supports textual sessions or has a textual browser (step 315). If NO, then an error message is generated (step 317).

If YES, then the Coordinator 140 notifies the Textual Browser 130 (step 320). The Textual Browser 130, in response, initiates a textual session on the browsing device and retrieves the initial textual web pages 114 from the Server-Side Application 110 (step 325). Then, the Textual Browser 130 plays the received textual web pages 114, the dialog, while the Voice Browser 120 renders the voice content 112 (step 330). Thus, at this point, the user has two methods of making a selection: (step 332) by key selection on the Voice Browser 120; and (step 334) by voice selection on the Textual Browser 130. Key selection includes pressing a key and, where available, a click using a mouse. Voice selection includes speaking an instruction.

Where the user makes a key selection (step 332), the Textual Browser 130 captures the user's action, retrieves a next textual web page 114 (the textual web page indicated by the key selection) from Server-Side Application 110 and notifies the Coordinator 140 of the event. The Coordinator 140 then determines if matching voice data exists (step 342). If there is no matching voice data, then an error message is generated (step 344). If there is matching voice data, then the Coordinator 140 notifies the Voice Browser 120 of the event (step 346). In response, the Voice Browser 120 retrieves the matching voice content 112 (step 348). This process is the repeated from Step 330 where the Voice Browser 120 plays the received voice content 112, while the Textual Browser 130 renders the received textual web pages 114.

Where the user makes a voice selection (step 334), the Voice Browser 120 uses speech recognition to determine the user's instructions, retrieves next voice content 112 (the voice content indicated by the voice selection) from Server-Side Application 110 and notifies the Coordinator 140 of the event (step 350). The Coordinator 140 then determines if matching text data exists (step 352). If there is no matching text data, then an error message is generated (step 354). If there is matching text data, then the Coordinator 140 notifies the Textual Browser 130 of the event (step 356). In response, the Textual Browser 130 retrieves the matching textual web pages114 (step 358). This process is the repeated from Step 330 where the Voice Browser 120 plays the received voice content 112, while the Textual Browser 130 renders the received textual web pages 114.

The above disclosure generally describes the present invention. A more complete understanding can be obtained by reference to the following specific Examples. These Examples are not intended to limit the scope of the invention. Changes in form and substitution of equivalents are contemplated as circumstances may suggest or render expedient. Although specific terms have been employed herein, such terms are intended in a descriptive sense and not for purposes of limitation.

To create matching voice and text data content for a generic application, an XML (eXtensible Markup Language) document type may be used. The following an example of an XML page to create matching voice and text content for a bookstore.
<bookstore>
<book>
<title>The Pelican Brief</title>
<author>John Grisham</author>
<price>$22.95</price>
</book>
<book>
<title>Bridget Jones Diary</title>
<author>Helen Fielding</author>
<price>$26.95</price>
</book>
</bookstore>

The XML page is stored on a web server of the Server-Side Application 110. When either the Voice Browser 120 or the Textual Browser 130 makes an HTTP (Hyper Text Transfer Protocol) request to the web server for this XML page, the Server-Side Application 110 determines what form the XML should be served in. If the HTTP request came from the Voice Browser 120, in the case of a VXML (Voice Extensible Markup Language) browser, the Server-Side Application 110 then returns VXML forms to the Voice Browser 120. In addition, the matching textual web pages 114 in the form of WML (Wireless Markup Language) are also created for access by the Textual Browser 130. This is, for example, accomplished by using two XSL forms to convert this one XML page document into matching VXML forms and WML cards.

The following is the XML page in voice content form, a VXML page.
<vxml>
<form id=bookstore><field>
<prompt><audio>What book would you like to order?</audio></prompt>
<filled>
<result name="the pelican brief">
   <audio>You selected the Pelican Brief</audio>
   <goto next="#pelican"/>
</result>
<result name="bridget jones diary">
   <audio>You selected Bridget Jones Diary</audio>
   <goto next="#bridget"/>
</result>
</filled>
</field>
</form>
<form id=bridget>
<prompt><audio>The cost of the book is $26.95. Would you still like to order Bridget Jones Diary by Helen Fielding?</audio></prompt>
<filled>
<result name="yes">
   <audio>You said yes</audio>
   <goto next="http://host/bridget.vxml">
</result>
<result name="no">
   <audio>You said no. Returning to the main menu</audio>
   <goto next="#bookstore"/>
</result>
</filled>
</form>
<form id=pelican>
<prompt><audio>The cost of the book is $22.95. Would you still like to order the Pelican Brief by John Grisham?</audio></prompt>
<filled>
<result name="yes">
   <audio>You said yes</audio>
   <goto next="http://host/pelican.vxml">
</result>
<result name="no">
   <audio>You said no. Returning to the main menu</audio>
   <goto next="#bookstore"/>
</result>
</filled>
</form>
</vxml>

The following is the XML page in textual web page form, which has three cards for a WML deck.
<wml>
<card id=bookstore>
<p>What book would you like to order?</p>
<select name="apps">
<option onpick="#pelican">The Pelican Brief by John Grisham</option>
<option onpick="#bridget">Bridget Jones Diary by Helen Fielding</option>
</select>
</card>
<card id=bridget>
<p>The cost of the book is $26.95. Would you still like to order Bridget Jones Diary by Helen Fielding?</p>
<select name="choice">
<option onpick="http://host/bridget.wml">Yes</option>
<option onpick="#bookstore">No</option>
</select>
</card>
<card id=pelican>
p>The cost of the book is $22.95. Would you still like to order The Pelican Brief by John Grisham?</p>
<select name="choice">
<option onpick="http://host/pelican.wml">Yes</option>
<option onpick="#bookstore">No</option>
</select>
</card>
</wml>

The VXML page has three forms that correspond with the three cards in the WML deck, and further prompts correspond with choices. The IDs of the VXML forms are identical to the IDs of the WML cards for the Coordinator 140 to track where in the VXML or the WML deck the caller is, and to direct an opposing browser to go to the appropriate place. The opposing browser is the Textual Browser 130 where the caller selects from the Voice Browser 120 and is the Voice Browser 120 where the caller selects from the Textual Browser 130.

When an initial content page is retrieved and executed, there must be some indication that matching text or voice content is available. Along with the indication, there must be some contact information delivered in the form of instructions on how to contact the appropriate opposing browser. There are two methods, such as for example, in which this can be implemented.

This contact information is contained in the XSL forms and the instructions are dynamically generated when the initial HTTP request is made. For example, in the case where the initial HTTP request is made by the Voice Browser 120, the contact information to contact the corresponding textual web page 114 is generated in the VXML page. Extra tags are added to the VXML page to indicate: a) that a matching textual web page exists 114; b) the protocol and means for connecting to the Textual Browser 130; and c) the address of the corresponding textual web page 114. A notification or alert containing this information is pushed to the Coordinator 140, which then notifies the Textual Browser 130 to start a WML session

The following is an example of a "meta" tag in the VXML page to provide the indication and the contact information using the following attributes: matching_content, protocol, browser_host, browser_port, and initial URL.
<vxml>
<meta matching_content=true protocol=wml browser_host=192.166.144.133 browser_port=2000 initial_url =http://host/servlet/XMLServlet?bookstore.xml>
<form><field>
<prompt><audio>What book would you like to order</audio></prompt>
</vxml>

An alternate method is to store the indication and the contact information in each of the browsers. Thus, if the caller accesses the Textual Browser 130 on a device, the information about the Voice Browser 120 to establish a session with that device is stored in the Textual Browser 130. A notification or alert containing this information is pushed to the Coordinator 140, which then notifies the Voice Browser 120 to start a VXML session.

The function of the Coordinator 140 is to detect when a session has started and when the caller has made any action. This may be accomplished in a number of different methods.

First, the Coordinator 140 may be downloaded to the Voice Browser 120 (the VXML browser) in the form of a SpeechObject. This client-side object then monitors what the caller is doing from the Voice Browser 120 and generates notifications for the opposing Textual Browser 130 to be sent via socket connection. An example of a notification for the opposing Textual Browser 130 is
GO http://host/servlet/XMLServlet/bookstore.xml.

Where the Coordinator 140 cannot easily monitor caller activity, such as in the case of the opposing Textual Browser 130, the Textual Browser 130 is adapted to inform the Coordinator 140 every time the caller makes an action. Where the Textual Browser 130 is a WML browser, an Event Listener object, for example, may be notified whenever the caller presses a key. The Event Listener object then generates a notification and sends this to the Coordinator 140. The Coordinator 140 then determines what the notification means in relation to the voice content 112. If the caller begins a session from the WML browser, the notification from the WML browser, for example, may be
NEW SESSION
matching_content=true
protocol=vxml
browser_host=192. 166.144.136
browser_port=2222 initial_url=http://host/servlet/XMLServlet?bookstore.xml

This information is extracted from a meta tag of the textual web page, a WML deck. The Coordinator 140 receives this notification and instructs the Voice Browser 120, a VXML browser, to begin a new session from the selected page.

To continue with this example: once the caller listens to the prompts and selects ordering the Pelican Brief book. The VXML browser (the Voice Browser 120) generates the prompt "You have selected the Pelican Brief' and goes to the form with ID "pelican". At the same time, the Coordinator 140 is notified by the Voice Browser 120 to generate a notification for the WML browser (the Textual Browser 130) to proceed to the corresponding textual web page 114. The notification for the Textual Browser 130 is, for example, GO #pelican.

From this point, the caller hears and views on the display "The cost of the book is $22.95. Would you still like to order The Pelican Brief by John Grisham?". Where the caller uses the Textual Browser 130 and selects "Yes", the Textual Browser 130 then generates a notification for the coordinator 130. The notification is, for example, RETREIVING http://host/pelican.wml.

It will be understood by those skilled in the art that the Coordinator 140 may be embedded in either the Textual Browser 130 or the Voice Browser 120 so that this one browser controls the opposing browser.

It will be understood by those skilled in the art that the textual web pages 114 may be automatically generated from the voice content 112, or vice versa. Thus, an application developer may only need to develop one side of an application as the other side is automatically generated.

An alternative method in which this invention may be implemented is having the textual web pages automatically generate from the voice content, or vice versa. Thus, the application developer only has to develop one side of the application. For example, as opposed to developing two XSL style sheets to convert a generic XML to a VXML and WML, the developer creates one stylesheet to convert VXML to WML on the fly. This is feasible because the structure of a VXML form matches to a certain extent the structure of a WML card.

It will be understood by those skilled in the art that the Internet as used in the present invention may be substituted by a wide area network, a local area network, an intranet, or a network of any type and that the web applications include applications provided over a network.

It will be understood by those skilled in the art that the terms textual web pages, textual information, and text data as used in the present invention includes any one of video, text, and still images, and combinations thereof.

It will be understood by those skilled in the art that the concept of the Coordinator 140 and the coordinated browsing System 100 may be applied to any system that renders information using simultaneous multiple media types. For example, a coordinator may be used for an interactive slide show with voiceovers.

Although preferred embodiments of the invention have been described herein, it will be understood by those skilled in the art that variations may be made thereto without departing from the scope of the invention or the appended claims.

The present invention can be implemented by a computer program operating on a standard computer system. An aspect of the present invention thus provides a storage medium storing processor implementable instructions for controlling processors of the system to carry out the method as hereinabove described.

Further, the computer program can be obtained in electronic form for example by downloading the code over a network such as the internet. Thus in accordance with another aspect of the present invention there is provided an electrical signal carrying processor implementable instructions for controlling one or more processors to carry out the method as hereinbefore described.

## Claims

1. A coordinated browsing system to enable bimodal feature access for a caller during a session, comprising
a server-side application connected to a network for providing voice pages and textual web pages;
a coordinator for coordinating the presentation of the voice pages with the presentation of the textual web pages during the session;
a voice browser in communication with the server-side application and the coordinator for receiving caller voice activity and, in response, retrieving a voice page to present to the caller; and
a textual browser in communication with the server-side application and the coordinator for receiving caller activity at the textual browser and, in response, retrieving a textual web page to present to the caller, and for providing notification to the coordinator of the caller activity occurring at the textual browser so that the coordinator, in response, notifies the voice browser to retrieve the voice page matching the textual web page for presentation to the caller;
wherein the voice browser further provides notification to the coordinator of caller voice activity occurring at the voice browser so that the coordinator, in response, notifies the textual browser to retrieve the textual web page matching the voice page for presentation to the caller.

2. The system of claim 1, wherein the voice browser presents the voice pages over a voice path on a first device and the textual browser presents the textual web pages on a display of a second device.

3. The system of claim 2, wherein the first device and the second device are combined into one device.

4. The system of claim 1, wherein the coordinator is embedded in one of the voice browser and the textual browser.

5. The system of claim 1, where the coordinator is downloaded into the voice browser in the form of a SpeechObject for monitoring the caller voice activity at the voice browser and, in response, generating the notifications to the textual browser.

6. The system of claim 1, wherein the coordinator is downloaded into the textual browser in the form of a Event Listener Object for monitoring the caller activity at the textual browser and, in response, generating the notifications to the voice browser.

7. The system of claim 1, wherein XML pages are converted using two XSL forms into matching VXML forms for the voice pages and WML cards for the textual web pages.

8. The system of claim 7, wherein IDs of the VXML forms are identical to IDs of the WML cards for coordinating the presentations between the voice browser and the text browser.

9. The system of claim 1, wherein each of the voice pages received by the voice browser further comprises an indication that the textual web page matching the voice page exists, protocol and means for connecting to the textual browser, and address of the textual web page matching the voice page.

10. The system of claim 9, wherein each of the voice pages is provided in a VXML form with the indication, the protocol and means, and the address as tags.

11. A method of providing coordinated browsing to enable bimodal feature access for a caller during a session, comprising
providing voice pages and textual web pages over a network;
retrieving a voice page and a textual web page that match for presentation on a voice browser and a textual browser respectively;
presenting the voice page with the presentation of the textual web page;
monitoring caller voice activity on the voice browser in order to, in response, retrieve a new voice page to present to the caller and to notify a coordinator of the caller voice activity occurring at the voice browser so that the coordinator, in further response, notifies the textual browser to retrieve a new textual web page matching the new voice page for presentation to the caller; and
monitoring caller activity on the textual browser in order to, in response, retrieve the new textual page to present to the caller and notify the coordinator of the caller activity occurring at the textual browser so that the coordinator, in further response, notifies the voice browser to retrieve the new voice page matching the new textual web page for presentation to the caller.

12. The method of claim 11, wherein the voice browser presents the voice pages over a voice path on a first device and the textual browser presents the textual web pages on a display of a second device.

13. The method of claim 12, wherein the first device and the second device are combined into one device.

14. The method of claim 11, wherein the coordinator is embedded in one of the voice browser and the textual browser.

15. The method of claim 11, where the coordinator is downloaded into the voice browser in the form of a SpeechObject for monitoring the caller voice activity at the voice browser and, in response, generating the notifications to the textual browser.

16. The method of claim 11, wherein the coordinator is downloaded into the textual browser in the form of a Event Listener Object for monitoring the caller activity at the textual browser and, in response, generating the notifications to the voice browser.

17. The method of claim 11, wherein XML pages are converted using two XSL forms into matching VXML forms for the voice pages and WML cards for the textual web pages.

18. The method of claim 17, wherein IDs of the VXML forms are identical to lDs of the WML cards for coordinating the presentations between the voice browser and the text browser.

19. The method of claim 11, wherein each of the voice pages received by the voice browser further comprises an indication that the textual web page matching the voice page exists, protocol and means for connecting to the textual browser, and address of the textual web page matching the voice page.

20. The method of claim 19, wherein each of the voice pages are provided in a VXML form with the indication, the protocol and means, and the address as tags.

21. The method of claim 11, wherein each of the textual web pages received by the textual browser further comprises an indication that the voice page matching the textual web page exists, protocol and means for connecting to the voice browser, and address of the voice page matching the textual web page.

22. The system of claim 1, wherein each of the textual web pages received by the textual browser further comprises an indication that the voice page matching the textual web page exists, protocol and means for connecting to the voice browser, and address of the voice page matching the textual web page.

23. Browsing apparatus for enabling bimodal feature access for a caller during a session, comprising:
communication means for communicating via a network with a server-side application for providing voice pages and textual web pages;
a coordinator for coordinating the presentation of the voice pages with the presentation of the textual web pages during the session;
a voice browser for being in communication with the server-side application and the coordinator for receiving caller voice activity and, in response, retrieving a voice page to present to the caller; and
a textual browser for being in communication with the server-side application and the coordinator for receiving caller activity at the textual browser and, in response, retrieving a textual web page to present to the caller, and for providing notification to the coordinator of the caller activity occurring at the textual browser so that the coordinator, in response, is operable to notify the voice browser to retrieve the voice page matching the textual web page for presentation to the caller;
wherein the voice browser further comprises means to provide notification to the coordinator of caller voice activity occurring at the voice browser so that the coordinator, in response, is operable to notify the textual browser to retrieve the textual web page matching the voice page for presentation to the caller.

24. A method of operating browsing apparatus to enable bimodal feature access for a caller during a session, comprising:
establishing a session via a network with a server-side application for providing voice pages and textual web pages;
operating a coordinator to coordinate the presentation of the voice pages with the presentation of the textual web pages during the session;
operating a voice browser in communication with the server-side application and the coordinator to receive caller voice activity and, in response, to retrieve a voice page to present to the caller; and
operating a textual browser in communication with the server-side application and the coordinator to receive caller activity at the textual browser and, in response, to retrieve a textual web page to present to the caller, and providing notification to the coordinator of the caller activity occurring at the textual browser so that the coordinator, in response, notifies the voice browser to retrieve the voice page matching the textual web page for presentation to the caller;
wherein the voice browser further provides notification to the coordinator of caller voice activity occurring at the voice browser so that the coordinator, in response, notifies the textual browser to retrieve the textual web page matching the voice page for presentation to the caller.

25. A storage medium storing processor implementable instructions for instructing one or more processors of a browsing apparatus to carry out all of the steps of a method as claimed in claim 24.

26. An electrical signal carrying processor implementable instructions for controlling one or more processors of a browsing apparatus to carry out all of the steps of a method as claimed in claim 24.
